Europäisches Patentamt

European Patent Office

Office européen des brevets

(11) Publication number: 0 331 463
A1

## EUROPEAN PATENT APPLICATION

(21) Application number: 89302041.2

(22) Date of filing: 01.03.89

(51) Int. Cl.⁴: H 02 K 41/03
B 65 G 54/02

(30) Priority: 02.03.88 GB 8804991

(43) Date of publication of application:
06.09.89 Bulletin 89/36

(84) Designated Contracting States:
AT BE CH DE ES FR GB GR IT LI LU NL SE

(71) Applicant: Williams Fairey Engineering Ltd.
P.O. Box 41 Crossley Road
Heaton Chapel Stockport Cheshire SK4 5BD (GB)

(72) Inventor: Edwards, John Denis, Dr.
31, King Henry's Road
Lewes, East Sussex, BN7 1BY (GB)

Williams, Graham, Dr.
Field House
Rodmell, Lewes, East Sussex, BN7 3BE (GB)

(74) Representative: Rees, David Christopher et al
Kilburn & Strode 30 John Street
London WC1N 2DD (GB)

(54) Improvements in electric machines.

(57) A linear reluctance motor comprises a primary (10), and a secondary (12) spaced from the primary by a non-magnetic barrier (28). The secondary comprises a cruciform of magnetic elements (36) mounted on a trolley (32). Each element is circular or otherwise tapered in the longitudinal direction to provide a smooth transition as they pass over the energised windings (24,26) on the primary.

In another aspect of the invention the secondary is constituted by the payload to be moved.

In yet another aspect of the invention, the machine works as an actuator for the control of fluid flow in which the reluctance primary is located outside a non-magnetic barrier in the form of a fluid conduit and is energisable to move a secondary in the conduit to register with a port to control the flow of fluid.

Fig. 4.

EP 0 331 463 A1

**Description**

## IMPROVEMENTS IN ELECTRIC MACHINES

This invention relates to electric machines. The invention is particularly applicable to a variable reluctance electric motor or actuator.

Linear reluctance motors for moving articles are known which comprise an elongate stationary primary, an at least partially magnetisable secondary movable relative to the primary, and a plurality of electrically conductive windings disposed along the length of the primary which are selectively energisable to create a controllable magnetic field to move and maintain the position of the secondary with respect to the primary.

Particularly, though not exclusively, in the food processing and canning industry it is necessary to move metallic objects, such as cans, around a plant. It is important to the sales of the products that the cans do not appear damaged or even merely dented in the retailers. As a lot of damage is caused to cans during transport of the cans around the canning plant it is highly desirable to minimise the risk of collision of cans in transit.

According to one aspect the present invention is characterised by non-magnetic support which spaces the secondary from the primary and the secondary, in use, is constituted, at least in part, by a payload, to be moved by the motor, which runs along the support.

Preferably, the secondary is constituted by a majority of the payload, or even the complete payload.

Preferably, the support comprises a non-magnetic guide or plate which is fixed relative to the primary, the secondary, in use, running along the surface of the plate remote from the primary. In this case, it is preferable that the plate is provided with a dry bearing surface along which the payload is constrained to run. It is also preferable that the plate constitutes part of an enclosed duct through which, in use, the payload travels.

Preferably, the windings are energisable to move a plurality of payloads along the support simultaneously either in a line along the support or generally laterally spaced across the support.

The payload may be located beneath the primary and the primary can then be energisable to attract the payload toward it. In this case the payload may be located beneath the support and the primary is then energisable to attract the payload against the support. In this configuration the weight of the payload is overcome by the attractive force of the primary. The attractive force is preferably just enough to overcome the weight of the payload so that the friction caused by the contact between the barrier and the payload is minimised.

Alternatively, the support may be located beneath the payload. Again, the primary is energisable to tend to attract the payload toward the primary away from the support. The attractive force is sufficient to counteract the weight of the payload bearing on the support so that the amount of friction existing between the support and the payload is reduced without necessarily raising the payload off the support.

In either of the above cases the attractive force of the primary is utilised to advantageous effect to reduce the friction existing between the support and the payload. Consequently, heavier loads, creating greater friction, can be carried than is otherwise the case for a given magnitude of propelling force.

Also according to the first aspect of the invention, there is provided a method of moving an at least partially ferritic payload along a linear reluctance motor which comprises a primary and a secondary; the method comprising placing the payload on a non-magnetic support interposed between the primary and secondary; and energising windings, associated with the primary, to create a travelling magnetic wave which urges the payload to move along such that the payload constitutes the secondary of the linear motor.

Clearly, the use of the payload to be moved to constitute the secondary of the linear motor is equally applicable to other transport situations in which collision may or may not be the primary consideration.

In hazardous and/or sterile environments it is often necessary to transport articles or fluids from one location to another without the risk of contamination either of the surrounding environment or of the articles of fluids being transported. Examples of this are radioactive fuel and waste processing, food processing, semiconductor manufacture, the assembly of precision mechanical parts and the production of drugs and chemicals.

To isolate the material from the surrounding environment may require an enclosed duct along which it travels. In all cases the means of transport must be controllable to ensure that the articles or fluid reaches the desired destination. The control of the movement of the articles or fluid is desirably achieved without breaching the duct. Clearly, any control elements inserted through the duct wall will compromise or, at the very least, provide a weak spot in the isolation of the system.

Materials handling systems have been proposed which use a battery operated self-propelled carrier vehicle travelling within the duct to move articles.

Although this solution is inexpensived, the relatively complex carrier vehicles are difficult to keep clean in order that they should provide reliable service. They also have moving parts that need lubricating and thus are prone to contaminating the material being transported.

Another proposal has been to use a linear reluctance motor in which the primary and secondary are separated by a barrier which may form part of a duct. The motor secondary forms part of the carrier vehicle and is pulled along by the travelling magnetic field produced by the motor primary which is positioned outside the containment barrier forming the duct. The linear reluctance motor system requires that the barrier material be non-magnetic so that magnetic fields can pass through it substantially undisturbed to influence the movement of the secondary. Linear reluctance motors are reliable as no active elements are contained within the duct.

Reluctance motor s are known which comprise a primary, a secondary having at least one magnetic element and being movable along a line with respect to the primary, and a plurality of electrically conductive windings associated with the primary and having at least a portion extending generally normal to the direction of movement of the secondary, which windings are selectively energisable to create a controllable magnetic field to move and maintain the position of the secondary with respect to the primary.

However, such proposed materials handling systems based on linear reluctance motors are prone to a somewhat uneven velocity of the secondary when moving through the duct. It is also difficult to monitor the precise position of the secondary within the duct for providing feedback to control the excitation of the primary. Another disadvantage is that known constructions of reluctance linear motor primaries are intricate and therefore costly to manufacture.

Furthermore, such isolated materials handling systems do not address the problem of the transport of fluid through pipework in the case where the purity or sterility of the fluid is paramount.

According to a second aspect the present invention is characterised in that the lateral dimension of the magnetic element with respect to the line increases progressively from a leading edge for at least a part of its length.

The tapered form of the secondary element provides a smooth transition region as the secondary passes over the primary.

Preferably, the element is symmetrical about the line. The element may, for example, be kite or diamond shaped but is preferably a square which, in any case, has one diagonal parallel to the line. Alternatively, the secondary can be formed as a flat circular disc.

In the above forms of secondary it is advantageous if the longitudinal distance from the leading edge to the point at which the width of the secondary is a maximum is equal to the length between an integral number of spaced portions of the windings extending generally normal to the movement of the secondary.

It is also preferable if the secondary element is mounted on a substantially non-magnetic trolley.

As an improvement on this, a plurality of secondary elements can be mounted parallel to the line. Additionally, to accommodate movement in more than one direction, the plurality of secondary elements are provided in cruciform.

According to a third aspect of the invention there is provided an electric reluctance machine for actuating a fluid control element located within a fluid bearing conduit, the machine comprising a primary, a secondary movable relative to the primary, a plurality of electrically conductive windings associated with the primary which are selectively energisable to create a controllable magnetic field to move and maintain the position of the secondary with respect to the primary, and a non-magnetic barrier interposed between the primary and the secondary of the machine, characterised in that the barrier constitutes part of the fluid bearing conduit and the secondary is both located within the conduit and operably attached to the control element.

The fluid control element can be a pump rotor, a valve member or a cell disrupter for use in, for example, micro-biological applications. Generally, the secondary may be rotatable within the primary.

Preferably, the secondary also constitutes the fluid control element.

When the fluid control element is a valve, it is preferable that the machine is in the form of a rotary motor. In this case, the barrier may constitute a section of pipe forming the fluid bearing conduit and the secondary is the rotor of the motor.

In such a valve, it is preferable that the secondary be constituted by at least one vane radially extending from the axis of rotation of the machine. The vane may be registrable with at least one inlet and/or outlet port leading to the interior of the pipe section, constituting the barrier, to regulate the supply of fluid therethrough in accordance with the energisation of the windings associated with the primary. In the event that there is a plurality of vanes extending radially from the axis of the rotation of the motor it is preferable that a spaced relationship between the primary and the secondary be maintained by means of a dry-bearing shoe or shoes mounted on the radially outer edge of the or each vane, which shoe bears on the interior of the barrier constituting the section of pipe.

It is preferable that the or each port is formed in an end wall extending across the barrier, one surface of which end wall is engageable with an adjacent end surface of the vane or vanes to control the flow of fluid therethough. In this case, it is desirable that one or both of the surface(s) of the end wall and the end surface is/are formed with a dry bearing surface layer. In the event that a plurality of ports are provided, it may be that each is engageable selectively to control the flow through specific ports.

Where a dry bearing material is required in this aspect of the invention it is preferable that the material be polytetrafluoroethylene.

The construction of known primaries for linear reluctance motors is complex. Commonly, such primaries comprise a laminated steel core having a series of lateral slots into which are received the side arms of generally hexagonal lap windings made of copper.

One arm of a first winding lies in a slot on or beneath another arm of a second winding in the characteristic lap wound fashion. Thus, the level of the one arm lying in a slot is different from the other arm lying in a subsequent slot in the primary. Such a winding shape is in itself expensive. Furthermore, constructing such a winding is time consuming and not easily applied to mass-production techniques.

It is an object of a fourth aspect of the invention to provide a much simpler construction of primary which is both cheaper and quicker to construct and more easily adaptable to different configurations or layouts of the primary.

According to the fourth aspect of the present invention there is provided a linear reluctance motor comprising a primary consisting of a former and a plurality of windings associated therewith, and a secondary movable relative to the primary, the windings of the primary being selectively energisable to create a controllable magnetic field to move and maintain the position of the secondary with respect to the primary, wherein the former comprises a core of magnetic material in the form of a bar, each of the windings being in the form of a coil wound around the bar and the windings being spaced from one another by a plurality of plates each of which is interposed between adjacent windings along the length of the bar.

Preferably, the plate is apertured and received on the bar through the aperture. The dimensions of each plate preferably correspond to that of each coil.

Preferably, each coil is wound on itself to constitute a disc which extends transversely to the longitudinal axis of the bar.

Preferably, each plate is rectangular. When each plate is square the length of each side is generally equal to the maximum transverse dimension of the windings. It is sometimes desirable to build the core up from a number of laminations. In this case it is desirable that the laminations extend parallel to the longitudinal axis of the composite bar.

In some applications it will be necessary for the linear motor to be able to move the secondary with respect to the primary along more than a single straight path. To change direction it is preferable for the linear motor to incorporate an intersection, whether it be a cross-over, a T-junction, an L-section or any combination thereof. In this case, it is preferable that the junction of the portion of the primary comprises a block of magnetic material from which the bars forming the core of each portion extend. In this case it is desirable that the dimensions of the face of the block facing a corresponding portion of primary match those of the adjacent plate constituting part of the the corresponding portion of primary of the motor.

It is also preferable that the coils be excited by a three phase alternating current supply.

In order to be able to transport material it is desirable that the secondary constitutes at least part of a carrier which is movable along a track made of non-magnetic material which is interposed between the primary and secondary fo the linear motor. In one embodiment, the secondary is mounted on a non-magnetic trolley which rides on the track. In this case, the secondary may be in the form of a line of three separate elements of magnetic material. Optionally, the secondary could be in a cruciform of five separate blocks of magnetic material, defining four limbs of equal length. This construction of secondary is particularly suited to a linear motor in which changes in direction can occur. In this case the carrier must be at least bi-directional to accommodate the changes in direction.

For the sake of ease of construction and installation, it is preferable that the primary is made in convenient lengths, referred to hereinafter as modules or sections, which are attachable end-to-end to form a primary, for example, beneath a track, of the desired length. In this case, a controller which is operable to control the movement of the secondary with respect to the primary can control the energisation of the windings associated with each section of primary. In this way it is possible to control the movement of more than one secondary on the primary track such that, for example, each secondary is spaced from adjacent secondaries by substantially the length of one section of primary.

Preferably, when the controller is used to control the energisation of the coils, the voltage of each of the three-phases is varied in discrete steps. In this case the controller may comprise counting means to monitor the energisation of the coils by counting the incremental and/or decremental steps of the variable waveforms.

The present invention can be put into practice in several ways, some embodiments of which will now be described by way of example with reference to the accompanying drawings in which:

FIGURE 1 is a section through a linear reluctance motor according to a first embodiment of the invention;

FIGURES 2 and 3 are illustrations of the windings used in the primary of the motor in Figure 1 in plan and side elevation respectively;

FIGURE 4 illustrates the configuration of secondary elements for use in the linear motor of Figure 1;

FIGURE 5 is a schematic illustration of a controller for the motor in Figure 1;

FIGURE 6 is a schematic illustration of a controller for controlling four separate sections of motor according to Figure 1;

FIGURE 7 is a circuit diagram of an inverter for use in controlling the motor of Figure 1;

FIGURE 8 illustrates, in partly cut away section, an intersecting junction of primaries of a linear motor according to a second embodiment of the invention;

FIGURES 9 and 10 illustrate a space plate and energising coil respectively for use in the motor in Figure 8;

FIGURE 11 is a scrap-section side view of a further linear motor construction;

FIGURE 12 is a plan of the motor in Figure 11;

FIGURE 13 is a scrap-section side view of another further linear motor construction;

FIGURE 14 is a plan of the motor in Figure 13;

FIGURE 15 is a scrap-section side view of a further linear motor construction;

FIGURE 16 is a plan of the motor in Figure 15;

FIGURE 17 is a section through a third embodiment of the invention for controlling fluid flow;

FIGURES 18 and 19 illustrate an end and side elevation respectively of a secondary for use in the motor in Figure 17.

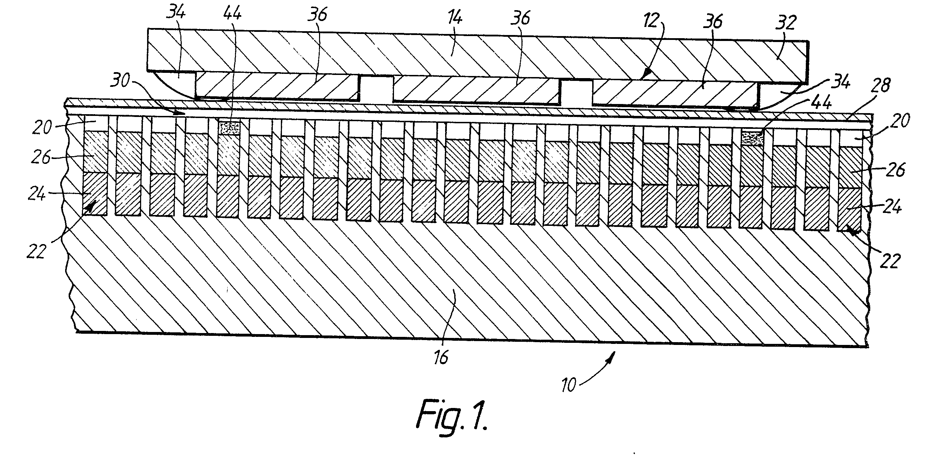

A three-phase short secondary linear reluctance motor and components thereof, according to a first embodiment of the present invention, are illustrated in Figures 1 to 7.

The linear motor comprises a primary 10 and a secondary 12 which is mounted on a trolley 14 to move along the length of the primary 10.

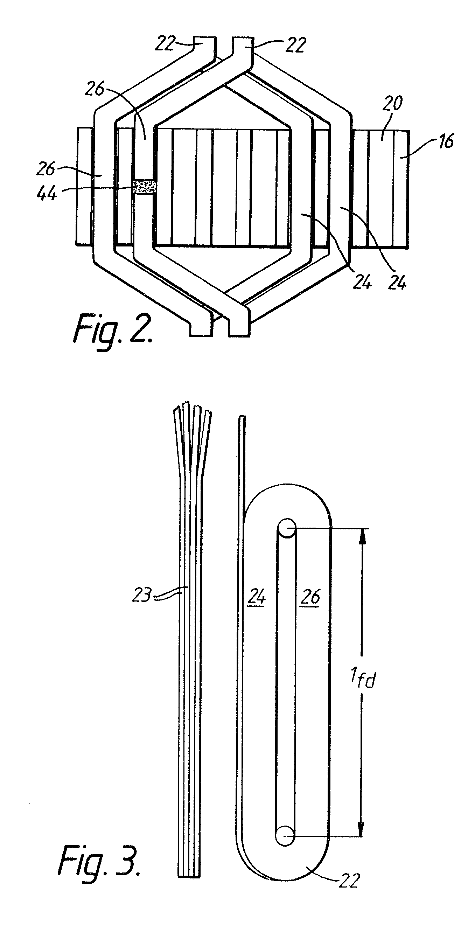

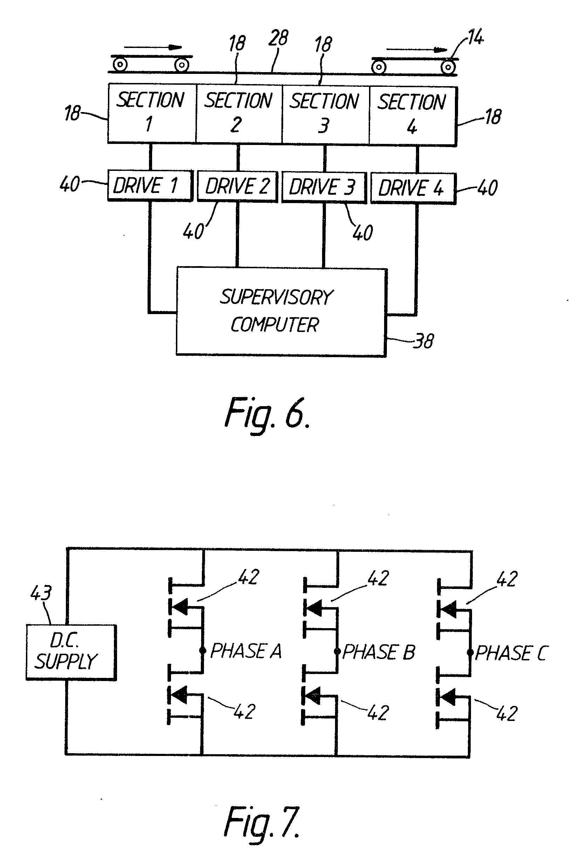

The primary comprises a core 16 which is sub-divided into 750 mm long sections or modules 18 (see Figure 6) of solid ferromagnetic mild steel for ease of manufacture and installation. Each module 18 is formed with a succession of similar laterally extending slots 20 which are, in this embodiment, 125 mm wide and 60 mm deep. One arm of each of two of a plurality of pulled-diamond wound enamel insulated conductors 22 are received in each slot 20 to form a double layer lap excitation winding (see Figures 2 and 3). A first arm 24 of one conductor 22 is received in the bottom of a corresponding slot and a second, opposite arm 26 of the one conductor 22 is received in a further slot 20 which is, in this embodiment, five slots along the core (see Figure 2). The second arm 26 rests on the top of a first arm 24 of a further conductor 22 in that slot 20. The conductors each comprise four rectangular section elements 23 which are wound side by side in an oval to create the offset arms 24 and 26.

The bottom surface 28 of an enclosing duct extends in the air gap 30 between the primary 10 and the secondary 12. As well as the bottom surface 28, the duct comprises side walls and a roof (not shown) such that the interior of the duct is effectively isolated from the primary and the external environment. In order that the presence of the bottom surface 28 of the duct is not detrimental to an unacceptable degree to the creation of the controlling magnetic field it is necessary to make the duct from an essentially non-magnetic material. In hazardous or corrosive environments it is desirable that the structure be as robust as possible. Thus, in the present embodiment the wall of the duct are constructed from a rolled sheet of 6.4 mm (0.25 inch) austenitic steel.

The trolley 14 which rides along the inside of the duct comprises an austenitic steel chassis 32 supported on four non-magnetic steel ball bearings 34.

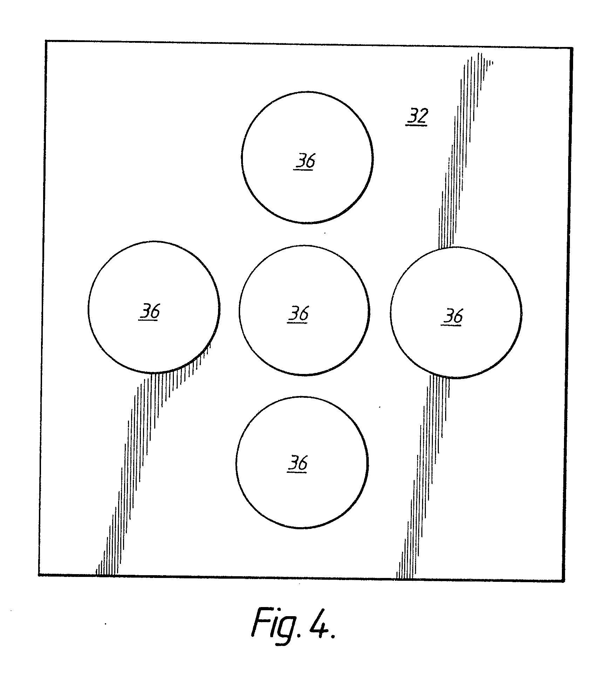

The secondary 12 consists of five flat 19 mm (0.75 inch) thick ferritic stainless steel flat circular plate elements 36 which are 127 mm (5 inches) in diameter. The plate elements 36 are mounted on the underside of the chassis 32 in a cross-configuration (see Figure 4). The flat surfaces of the plate elements 36 face the primary 10. The air gap i.e. the distance between the flat faces of the secondary and the top of the primary, is 9.5 mm (0.37 inch).

All the modules or sections 18 are controlled by a central controller computer 38 (see Figure 6) which actuates a drive circuit 40 associated with a corresponding module 18. The drive circuit 40 energises the windings of the primary 10, to create the necessary travelling or stationary magnetic field to move or detain the secondary 12 mounted on the trolley 14.

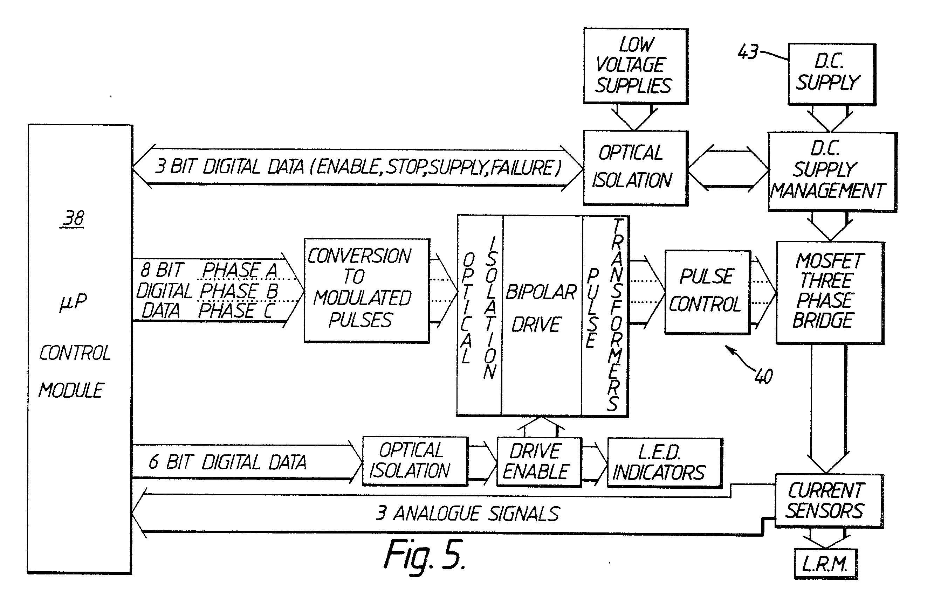

The drive circuit 40 is a three-phase pulse width modulated (PWM) inverter based on a power metal oxide silicon field effect transistor (MOSFET) three-phase bridge circuit having arms A, B and C corresponding to the three-phases (see Figure 7). The arms of the bridge of MOSFETS 42 are each driven by a digital transformer-isolated system from a d.c. supply 43 (see Figure 5). Feedback signals, relating to the position of the secondary with respect to the primary, are provided by Hall-effect transducers 44, which are placed strategically along the length of the primary 10.

Each Hall-effect transducer device 44 is located centrally in a corresponding slot 20 above the associated winding therein but recessed slightly within the slot 20 to provide mechanical protection (see Figure 2). The Hall-effect device 44 will generate a change in output due to the distortion of the magnetic field created by the windings as the secondary 12 passes over it. This change in signal is fed to the controller computer 38 via a data acquisition module which converts the signals into a digital form.

In order to sense the position of the trolley 14 at a specific point on the primary, a pair of Hall-effect devices 44 are each mounted in corresponding slots 20 which are spaced apart by a distance corresponding to the overall length of the secondary 12 mounted on the trolley 14.

Alternatively, to monitor the position of the trolley 14 continually, the Hall-effect devices 44 are placed along the length of the primary 10 spaced from one another by the length of the secondary 12.

This represents an economical approach to the use of the Hall-effect devices 44. Clearly, such devices could be placed at closer intervals. However, the computing power of the controller computer 38 would have to be increased accordingly to acquire and process the position information.

Under the control of the computer 38 a travelling magnetic wave of alternating north and south poles is set up between the slots 20 of the primary 10 by creating an eight-bit resolution digitised sinusoidal excitation current in the windings. The trolley 14 comprising the magnetic secondary 12 is caused to move along the duct at a speed related to the speed of movement of the travelling magnetic field substantially unaffected by the duct. The controller 38 can be operated to maintain a fixed or standing magnetic wave configuration and thus hold the secondary and the trolley 14 in a specific position.

Each module or section 18 of primary 10 is separately driven by a dedicated drive circuit 40 under the command of the controller computer 38. By this, it is possible to control the movement of more than one trolley 14 on the same linear motor primary. The controller computer 38 is programmed to create a series of travelling magnetic waves. Each one of the waves carries with it a trolley 14. Between each moving trolley 14 is a dead region of unexcited windings of at least one module's length to create a suitable buffer zone to avoid the risk of collision between trolleys.

The controller computer 38 counts the digitised steps in the increase and decrease in excitation current as the travelling wave moves through one of the modules 18 under the actuation of the associated drive circuit 40. In this way, the controller 38 is able to effect a smoother hand-over between modules 18 as the travelling magnetic wave passes along the length of the primary 10. This is because there is no ambiguity in the excitation of windings at the end of a module 18 which might otherwise occur if the windings in an adjacent module 18 were indpendently energised without reference to the excitation of the previous module.

Although the count of the digitised steps of the energising current could also be used to derive information related to the position of the trolley 14 it is possible for the trolley to experience an amount of lag within the influence of the magnetic field. To a large extent this will be due to the weight of the material carried on the trolley. To ensure that the precise position is available to the controller 38 it is necessary to derive a position signal from the chassis itself. In hazardous or sterile environments it is essential that the duct is not breached as mentioned above. Consequently, it is necessary to monitor the movement of the trolley 14 remotely. Thus, as the secondary passes the Hall-effect transducers 44 the precise location of the trolley 14 can be monitored by measuring the increase in magnetic field without having to breach the duct.

Table I summarises the dimensions and design data of the first embodiment of the invention.

In a modification of the first embodiment, the solid core 16 is replaced by a laterally laminated alloy steel core. The laminations extend for the length of each module 18 and are held together by a series of lateral tie bolts in the bed of the core. Each slot defined by the laminated core is lined with a polyethylene lining sleeve which protects the windings from damage.

In a further modification of the first embodiment of the invention the trolley is replaced by a static dry bearing surface of polytetrafluoroethylene (ptfe) which is fixed to the bottom surface 28 of the duct. The secondary is then constituted by the article to be transported.

### TABLE I

| | | |
|---|---|---|
| normal force | = | 1222 N |
| tractive force | = | 253 N |
| current load angle | = | $30^\circ$ |
| acceleration | = | 1.0 m/s$^2$ |
| speed | = | 1.0 m/s |
| frequency | = | 3.33 Hz |
| phase current | = | 12.6 A |
| phase voltage | = | 74.4 V |
| slots/pole/phase | = | 2 |
| pole pitch | = | 150 mm |
| no. of poles per module | = | 5 |
| module length | = | 750 mm |
| slot pitch | = | 25 mm |
| slot width | = | 15 mm |
| tooth width | = | 10 mm |
| slot depth | = | 60 mm |
| core depth | = | 20 mm |
| core space factor | = | 0.9 |
| tooth space factor | = | 0.9 |
| airgap length | = | 9.5 mm |
| effective airgap length | = | 10.94 mm |
| airgap flux density | = | 0.394 T |
| tooth flux density | = | 1.09 T |
| core flux density | = | 1.10 T |
| widning pitch | = | 5/6 |
| winding factor | = | 0.933 |
| no. of turns in series per coil | = | 60 |
| mean turn length | = | 800 mm |
| phase resistance | = | 3.4 ohms |
| leakage coefficient | = | 0.4 |
| magnetising reactance | = | 3.5 ohms |
| net impedance/phase at 1 m/s | = | 5.9 ohms |
| no. of segments | = | 3 |
| segment depth | = | 15.6 mm |
| segment trim angle | = | $36.7^\circ$ |
| segment width and length | = | 125 mm |
| short-secondary factor, $C_{st}$ | = | 1.08 |
| short-secondary factor, $C_{sn}$ | = | 0.95 |
| $C_d$ | = | 0.88 |
| $C_{q1}$ | = | 0.35 |
| $C_{q3}$ | = | 0.20 |
| current loading | = | 80.3 kA/m |
| conductor cross sectional area | = | 3.723 mm$^2$ |
| current density | = | 3.384 A/mm$^2$ |
| duct width | = | 450 mm |
| duct height | = | 450 mm |
| weight of windings | = | 39.6 kg |
| weight of core | = | 12.1 kg |
| weight of teeth | = | 13.1 kg |
| primary weight | = | 64.8 kg |
| steady-state winding temperature rise | = | $260^\circ$C |
| ambient temperature | = | $40^\circ$C |
| thermal time constant | = | 98 minutes |

Clearly, the article to be transported will have to include a suitable amount of ferritic material in order for it to be influenced by the travelling magnetic field. Thus this aspect of the invention is particularly applicable to the food processing and canning industry in which experience has shown that it is prejudicial to sales of canned foodstuffs if the can appears dented or otherwise damaged whether or not the seal of the can is broken. The cans do not have to be isolated from the environment and the enclosed duct may be replaced by an open channel.

In this embodiment of the invention the computer controller 38 is again programmed to create a series of travelling magnetic waves. Each one of the waves carries a plurality of cans sliding along the dry bearing surface. Additionally, further primaries can be employed to create travelling magnetic waves which run parallel to the first. In this way a plurality of, for example, cans can be transported in a laterally spaced relationship, with respect to the original primary, by the travelling magnetic waves.

If the use of a dry bearing surface is applied to a single track or multiplicity of tracks of, for example, cans on the linear reluctance motor, the cans moved by the travelling magnetic wave are separated by one half of a wavelength such that a space exists between them. In this way the cans are transported without colliding.

The ptfe bearing surface must be replaced when it is worn. To make it easier to do this it is possible to use a pair of ptfe rails received in grooves in the floor of the duct or channel. The rails can simply be stripped from the grooves and replaced with fresh ones as required.

In another modification of the first embodiment the secondary elements are hexagonal plates which are each mounted on the trolley 14 with two sides parallel to the longitudinal axis of the primary 10. The plates are dimensioned such that the central leading tip, with respect to the direction of movement of the secondary, is directly above the edge of a slot 20 as the laterally disposed tips are leaving the area directly above another of the slots 20.

In the case of either circular or hexagonal plates a smoother transition between slots is achieved than has previously been the case when square plate elements have been mounted square-on to the primary 10.

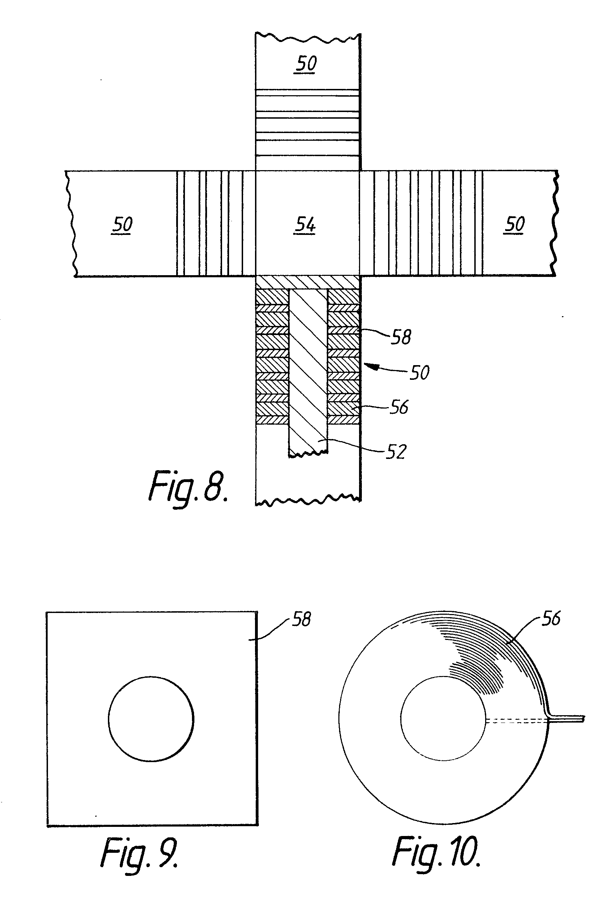

Referring to Figures 8 to 10 a second embodiment of the invention is illustrated in which each of four interconnecting primary sections 50 is constructed around a central tie bar 52. The general principle of construction is illustrated with reference to a three-phase linear reluctance motor primary having portions intersecting at right angles, but clearly the invention is equally applicable to joined straight sections of primary, T-junctions and the like.

The tie bars 52 are secured to a central cube 54 of magnetic steel and extend outwardly therefrom in a common plane. Mounted on each of the tie bars 52 is a plurality of insulated copper conducting disc-like coils 56, each of 100 turns, which constitute the excitation windings. Apertured plates 58 of magnetic steel are received on the tie bar 52, each interposed between adjacent coils 56. The plates 58 are acting as teeth which define slots in which the coils 56 are located. The end of each length of portion of primary 50 is completed by a nut (not shown) which is threadedly received on the tie bar 52 to hold the series of coils 56 and plates 58 in position.

Again, a secondary (not shown) constructed on a trolley similarly to that described in relation to the first embodiment, can be used to transport the goods. However, the dimensions of the portions 50 of the second embodiment dictate that the dimensions of the secondary will be modified accordingly. A non-magnetic duct on which the trolley travels is mounted above the primary, as before.

The purpose of the cross-like configuration of secondary elements, which will be similar to that illustrated in Figure 4 is clear from the intersecting section shown in Figure 8. When the excitation of the coils 56 is controlling the trolley to move in one direction along one primary 50, the laterally extending secondary elements with respect to the direction of movement will be come aligned with the other primary 50 extending in the other direction as the trolley passes over the central cube 54. When it is desired to move the trolley in the other direction the computer will excite the windings in the other primary portion 50 to move the trolley along it on the ball bearing runners.

Again, a controller computer is used to excite sections of windings to move more than one trolley at a time and to create the necessary supplementary excitation at a junction to change the direction of movement of the trolley.

A summary of the dimensions of the primary second embodiment of the linear motor is given in Table II.

### TABLE II

| | |
|---|---|
| Width of primary | 76.2 mm |
| Thickness of plates | 4.76 mm |
| Thickness of coils | 10.48 mm |
| Pole pitch | 91.44 mm |
| Slot pitch | 15 mm |
| 6 slots per pole | |
| Diameter of tie bar | 30 mm |
| Dimensions of central cube | 76.2mm x 76.2mm x 76.2mm |

The inventors have also developed a further advantageous configuration of linear reluctance motor which is particularly applicable to the transport of goods in which at least a part of the goods constitute the ferritic secondary element, such as the cans previously described. In the modified form, the arrangement of the primary and secondary is inverted so that the active surface of the primary element is on its underside and the secondary is located beneath the primary element.

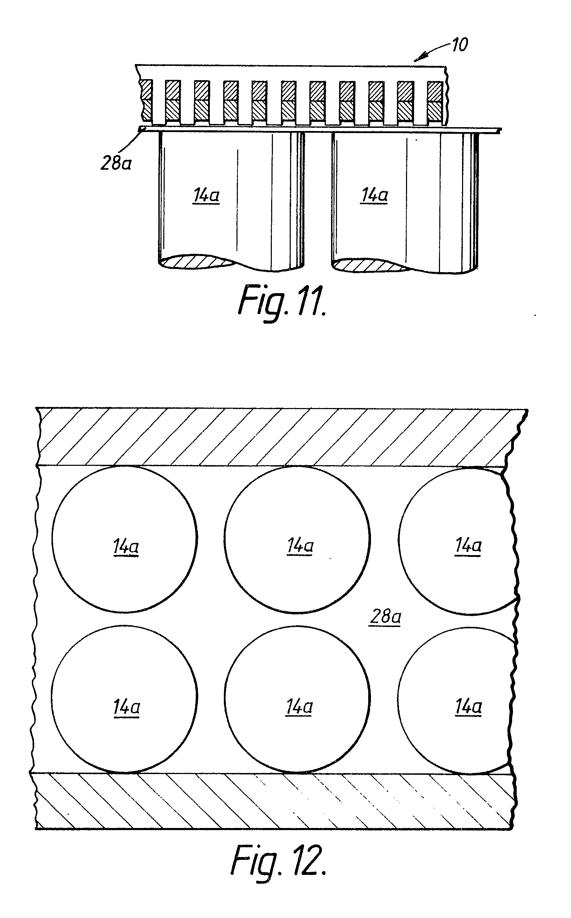

A first embodiment of this is shown in Figures 11 and 12 in relation to the diamond lap wound primary illustrated in Figure 1. In this embodiment the primary 10 is inverted and a non-magnetic barrier 28a is located beneath the active surface. The secondary consists of a plurality of at least partially ferritic payloads, such as cans 14a, travelling in rows abreast.

The travelling magnetic field of the primary 10 creates an attractive force which is exerted on each secondary payload 14a. The force is greater than the force of gravity exerted on each payload 14a and each is thus attracted to the non-magnetic barrier 28a separating the primary and secondary.

As before, the travelling magnetic field also exerts the motive force on each payload tending to cause them to move along the barrier 28a beneath the primary 10.

Thus, the windings of the motor are energised both to move the payload and to attract it to the barrier. Because the upward force exerted by the primary on the secondary is greater than the downward force of gravity only by sufficient to maintain the secondary in contact with the barriers the net force between barrier and secondary is significantly smaller than either force. Consequently, the enhanced friction due to the force of the contact between the payload and barrier is controllable so that it can be substantially reduced. Becuase of this a dry bearing surface between the barrier and payload, as previously described, is not necessary.

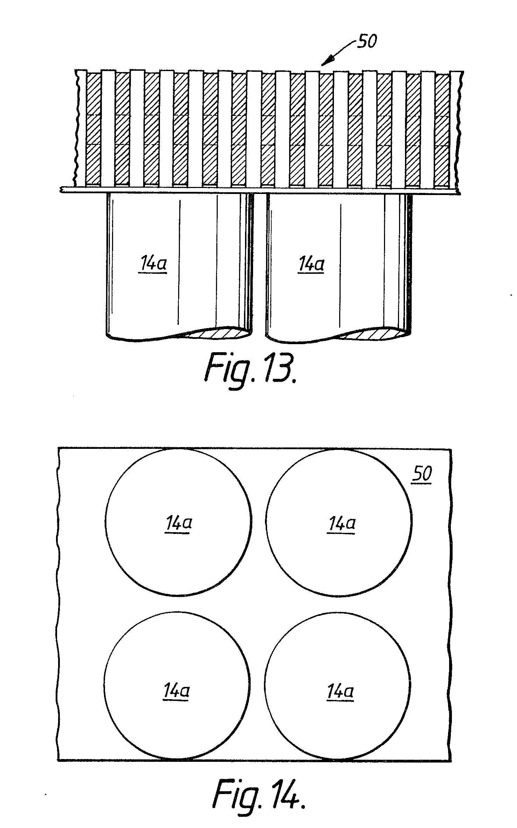

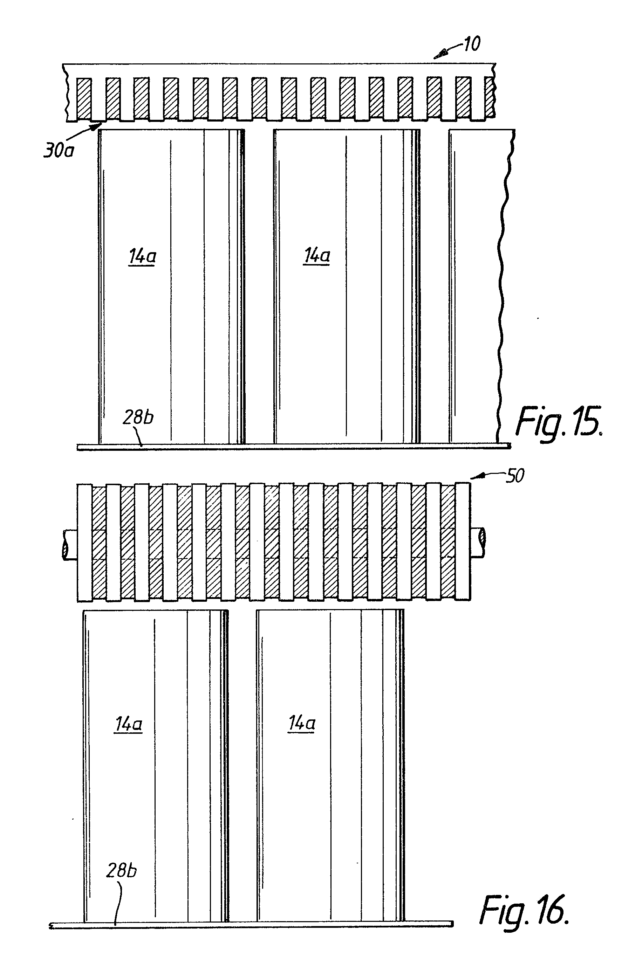

Another embodiment of the inverted configuration is illustrated in Figures 13 and 14 in which the ring-core construction of the primary 50 of Figure 8 is used. The principle of operation is substantially the same as that in the embodiment of Figure 11.

The same basic principle is applied in Figures 15 and 16. However, in these embodiments the secondary payload 14a is separated from the primary 10 or 50 simply by an air gap 30a. The secondary is supported in relation to the primary by being mounted on a supporting pathway 28b beneath the secondary.

As before, the travelling magnetic field of the primary creates an upward force on the secondary as well as the propelling force. However, this upward force is less than that exerted by gravity on the payload and the payload remains in contact with the support. Because the attracting force exerted by the primary on the secondary is only slightly less than the force of gravity, the frictional force resisting motion of the secondary is much reduced. If the attractive force is chosen correctly to be sufficiently close to the force gravity a dry bearing surface may be unnecessary for loads that would otherwise require it.

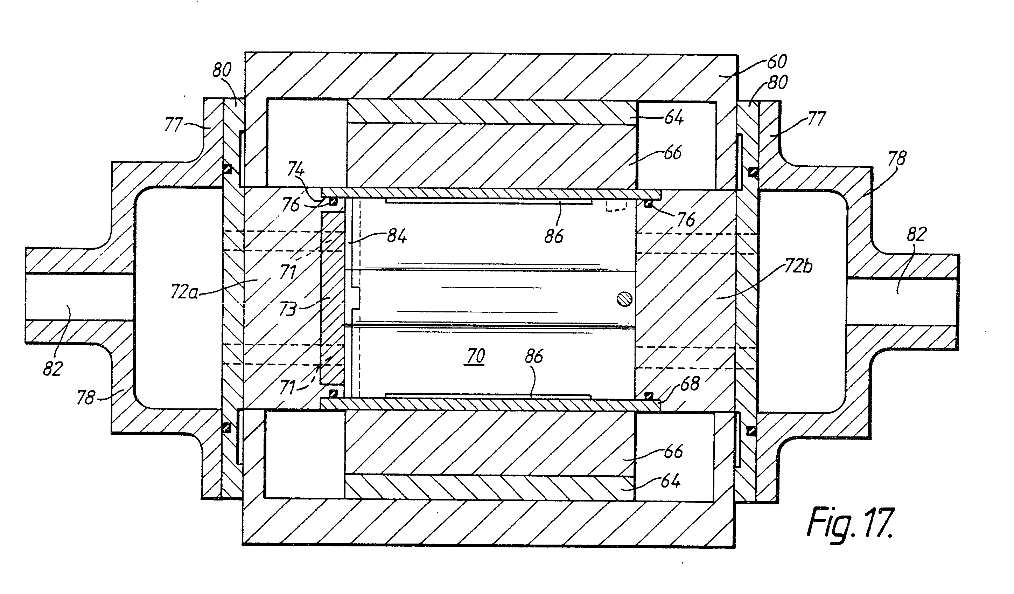

Referring to Figures 17 to 19, a third embodiment of the invention is a control valve incorporated in a rotary reluctance motor.

A motor casing 60 supports a stator 62 comprising a stator core 64 and three phase windings 66. A metal non-magnetic sleeve 68 is fitted within the internal diameter of the stator winding 66. A rotor 70 of ferritic stainless steel is rotatable within the non-magnetic sleeve 68.

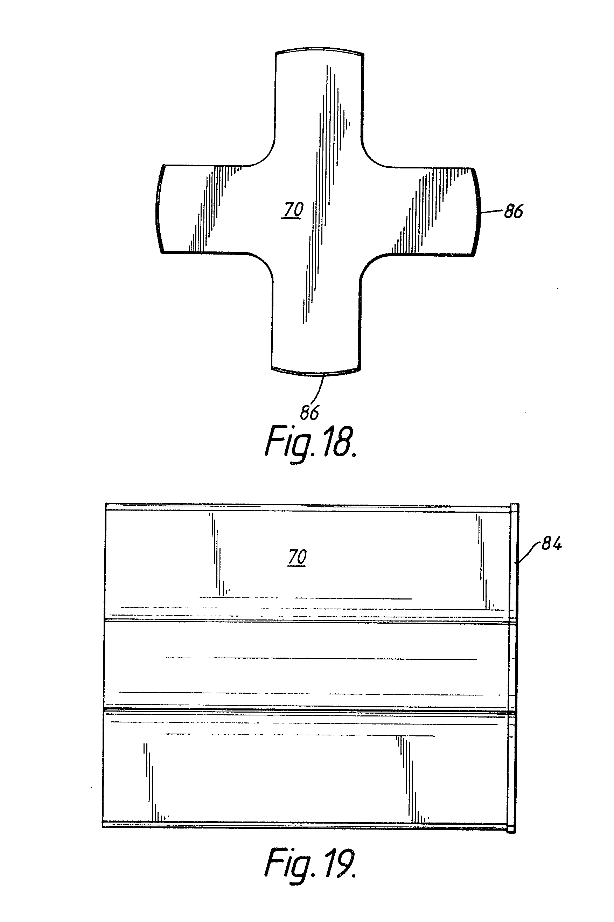

The rotor 70 has a lateral cross-section in the form of a cross (see Figure 18). The arms 69 of the cross can be rotated to coincide with ports 71 in an end plate 72a. The end plate 72a is received within one end of the casing 60 to selectively engage the adjacent end of the sleeve 68 by means of an annular shoulder 74 which mates with an o-ring seal 76 located on the internal surface of the sleeve 68.

A similar end plate 72b is received in the opposite end of the casing 60 and similarly engages an o-ring seal 76 in the sleeve 68.

An end adaptor 78 is mounted on each end of the casing 60. Each adaptor 78 comprises an adaptor pipe 82 which opens into a chamber 83 adjacent a corresponding end plate 72 a or b.

Each of the end plates 72a and b is clamped to the casing 60 by means of bolts (not shown) which extend through a flange 77 on the end-adaptor 78 of the casing 60, through a flange on the end plate 72 and into threaded holes in the casing 60.

The rotor 70 has a dry bearing surface 84 of polytetrafluorothylene (ptfe) on an end face and ptfe dry bearing shoes 86 let into the ends of the radially outwardly facing surface of each arm 69, which bear against the internal surface of the sleeve 68. A ptfe dry bearing pad 73 is let into one face of the end plate 72a which has ports 71 through which fluid is delivered to the valve. The pad 73 is in sealing contact with the surface 84 on the end face of the rotor 70.

In use, the adaptor pipes 82 are connected into a fluid path to be controlled by the valve. The fluid to be controlled flows through ports 71 in one end of the casing 60, into the interior of the sleeve 68 and out through the ports 71 in the end plate 72b.

When the winding 66 of the three phase stator 62 are energised the rotor 70 will rotate within the sleeve 68 and also urge the dry bearing surfaces 84 axially with respect to the axis of the motor into sealing contact with the pad 73 of the adjacent end plate 72. Thus, as the rotor 70 rotates and the arms 69 register with the ports 71 in the end plate 72, the flow path therethrough is sealed off. A shift in the phase of the excitation of the winding 66 will rotate the rotor 70 out of sealing registration with the ports 71 and flow through the valve can be resumed. During relative movement between the rotor 70 and stator 62 the dry bearing plates 86 bear on the internal surface of the sleeve 68 and maintain the spaced relationship between the two.

In this embodiment the motor casing 60 and three phase winding 66 are taken from a conventional induction motor, specifically one manufactured by the General Electric Company, model D90L, 1.5kw.

Thus, the only moving part of the valve assembly is the rotor of the motor which also constitutes the valve member. The pipework to which the valve is connected is sealed and no breach of the pipe wall is required to effect the control of the valve member.

Alternatively, the actuator, according to this aspect of the invention, could execute a linear movement. In this form a linear reluctance motor primary is used. The primary is energised to move a magnetisable gate which is the equivalent of the rotor 70. However, as before the primary and secondary are separated by a non-magnetisable barrier which may completely define the fluid conduit through which the fluid whose flow is to be controlled passes. The primary is thus energisable to move the gate to permit or limit fluid flow through the conduit. The limited flow can constitute a fraction of the total flow or a total blockage.

In one form the barrier is constituted by a first pipe which is disposed within a second pipe of larger bore. The primary element is located outside at least the first pipe and actuates a secondary within the first pipe, which secondary is in the form of a toroid or disc located coaxially with respect to the first pipe. The secondary is actuated to move along the axis into and out of registry with a port in the wall of the pipe to control the flow from one pipe to the other.

Clearly, the shapes of the secondary and the ports can be designed to provide valve opening characteristics for a given amount of travel in accordance with a particular application, as will be apparent to the person skilled in the art.

## Claims

1. A reluctance motor comprising a primary (10), a secondary (12) including at least one magnetisable element (36) and being movable along a line with respect to the primary, and a plurality of electrically conductive windings (24,26) associated with the primary and having at least a portion extending generally normally to the direction of movement of the secondary, which windings are energisable to create a controllable magnetic field to move and maintain the position of the secondary with respect to the primary, characterised in that the lateral dimension of the magnetic element with respect to the line increases progressively from a leading edge for at least a part of its length.

2. A motor as claimed in claim 1 in which the or at least one element is symmetrical about the line.

3. A motor as claimed in claim 1 or 2 in which the or at least one element is rhombic or rectangular in shape, for example, diamond or kite shaped or square, respectively.

4. A motor as claimed in claim 1 or 2 in which the or at least one element is circular.

5. A motor as claimed in any preceding claim in which the longitudinal distance from the leading edge to the point at which the lateral width of the or each element is a maximum is equal to the length between an integral number of longitudinally spaced portions of the windings extending generally normal to the movement of the secondary.

6. A motor as claimed in any preceding claim in which the element(s) is/are mounted on a non-magnetisable trolley (14).

7. A motor as claimed in any preceding claim in which a first plurality of elements is arranged parallel to the said line.

8. A motor as claimed in claim 7 in which a second plurality of elements is arranged normally with respect to the said line.

9. A motor as claimed in claim 8 in which the arrangement of elements defines a cruciform.

10. A motor as claimed in claim 8 or 9 in which the primary includes an intersection at the junction of two or more lengths of primary which comprises an intersecting magnetisable block (54), faces of the block being arranged normally to the direction along which the corresponding length of the primary extends.

11. A motor as claimed in claim 10 in which the dimensions of each face of the block correspond to those of an adjacent end of a length of primary.

12. A linear reluctance motor conveyor for moving articles comprising an elongate stationary primary (10); one at least partially magnetisable secondary (12) movable relative to the primary, constituted, in use, by an article (14a) to be moved; a plurality of electrically conductive windings (24,26) disposed along the length of the primary which are selectively energisable to create a controllable magnetic field to move and maintain the position of the secondary with respect to the primary, and a non-magnetic support (28,28a,28b) spacing the secondary from the primary.

13. An actuator for a fluid control element located within a fluid bearing conduit, the machine comprising a primary (64), a secondary (70) movable relative to the primary, a plurality of electrically conductive windings (66) associated with the primary which are selectively energisable to create a controllable magnetic field to move and maintain the position of the secondary with respect to the primary, and a non-magnetic barrier (68) interposed between the primary and the secondary of the machine, characterised in that the barrier constitutes part of the fluid bearing conduit and the secondary is both located within the conduit and operably attached to the control element.

Fig. 1.

Fig. 2.

Fig. 3.

Fig. 4.

Fig. 5.

Fig. 6.

Fig.7.

Fig. 8.

Fig. 9.

Fig. 10.

Fig. 11.

Fig. 12.

Fig. 13.

Fig. 14.

Fig. 15.

Fig. 16.

Fig. 17.

Fig. 18.

Fig. 19.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0207353 (NAGASAKA) <br> * page 3, line 26 - page 5, line 25; figures 1-4A * | 1, 2, 4, 5, 7-9 | H02K41/03 <br> B65G54/02 |
| X | FR-A-2386181 (HIGELIN) <br> * page 2, line 15 - page 3, line 28; figures 3, 17 * | 1, 2 | |
| A | FR-A-2369716 (AUXILEC) <br> * page 3, line 6 - page 4, line 5; figure 2 * | 1 | |
| A | DE-A-3037648 (FURCHERT) <br> * page 17, line 15 - page 18, line 11; figures 1, 2 * | 10 | |
| X | FR-A-1249223 (DAUPHIN) <br> * the whole document * | 12, 13 | |
| X | FR-A-788423 (BALARESQUE) <br> * page 3, line 17 - line 61; figures 1, 2 * | 12 | |
| X | FR-A-2277016 (PEUGEOT & RENAULT) <br> * page 1, line 34 - page 4, line 28; figure 1 * | 12 | TECHNICAL FIELDS SEARCHED (Int. Cl.4) <br><br> H02K <br> B65G |
| X | US-A-3708251 (PIERRO) <br> * column 4, line 1 - column 5, line 20; figures 2, 3 * | 13 | |
| X | DE-A-2903817 (KOFINK) <br> * page 5, line 20 - page 6, line 22; figure 1 * | 13 | |
| A | US-A-3167168 (CHESTER P. PARK) | | |

The present search report has been drawn up for all claims

| Place of search | Date of completion of the search | Examiner |
|---|---|---|
| THE HAGUE | 02 JUNE 1989 | LE GUAY P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)